# FASCICULE DE BREVET EUROPEEN

(11) **EP 2 772 764 B1**
(45) Date de publication et mention de la délivrance du brevet: **20.01.2016**
(21) Numéro de dépôt: 14156351.0
(22) Date de dépôt: 24.02.2014
(51) Int. Cl.: G01P 5/165

(54) **Sonde de mesure de pression totale d'un écoulement et procédé de mise en oeuvre de la sonde**
Sonde zum Messen des Gesamtdrucks einer Strömung, und Verfahren zum Betreiben dieser Sonde
Probe for measuring the total pressure of a flow and method for implementing the probe

(30) Priorité: 01.03.2013 FR 1300464
(43) Date de publication de la demande: 03.09.2014
(73) Titulaire: Thales, 92200 Neuilly Sur Seine (FR)
(72) Inventeur: Martin, Frédéric, 41102 Vendôme Cedex (FR); Desbiolles, Serge, 41102 Vendôme Cedex (FR); Mandle, Jacques, 26027 Valence Cedex (FR)
(74) Mandataire: Collet, Alain

(56) Documents cités:
- GB-A- 530 722
- US-A- 4 000 647
- US-A- 5 337 602

## Description

L'invention concerne une sonde de mesure de pression totale d'un écoulement et un procédé de mise en oeuvre de la sonde.

Le pilotage de tout aéronef nécessite de connaître sa vitesse relative par rapport à l'air, c'est-à-dire au vent relatif. Cette vitesse est déterminée à l'aide de sondes de mesure de la pression statique Ps et de la pression totale Pt, ainsi que de capteurs de mesure de l'angle d'incidence α et de l'angle de dérapage β. α et β fournissent la direction du vecteur de vitesse dans un système de référence, ou référentiel, lié à l'aéronef et Pt - Ps fournit une information qui, combinée avec la température de l'air, permet de calculer le module de ce vecteur vitesse. Ces cinq paramètres aérodynamiques permettent donc de déterminer le vecteur vitesse de tout aéronef, tel que par exemple un avion ou un hélicoptère.

La mesure de la pression totale Pt se fait habituellement à l'aide d'un tube dit de Pitot. Il s'agit d'un tube ouvert à l'une de ses extrémités et obstrué à l'autre. L'extrémité ouverte du tube fait sensiblement face à l'écoulement.

Le filet d'air situé en amont du tube est progressivement ralenti jusqu'à atteindre une vitesse quasi nulle à l'entrée du tube. Le ralentissement de la vitesse de l'air augmente la pression de l'air. Cette pression augmentée forme la pression totale Pt de l'écoulement d'air. A l'intérieur du tube de Pitot, on mesure la pression d'air qui y règne.

Pour pouvoir fonctionner en conditions humides, ce tube de Pitot est réchauffé électriquement. Le réchauffage évite que le tube ne soit obstrué par de l'eau ou même de la glace, lors de vols en conditions givrantes et permet d'évacuer toute trace d'humidité lors du fonctionnement au sol. Ce tube est muni d'un ou plusieurs trous de purge et pièges à eau, pour éviter toute remontée d'eau dans la canalisation de pression totale. Les trous de purge permettent d'évacuer l'eau ayant pénétré dans le tube de Pitot. Le fonctionnement nominal du tube Pitot implique un réchauffage pour éviter l'accumulation d'eau Pour réaliser une mesure correcte de pression totale, le tube de Pitot est monté sur un mât permettant d'écarter le tube de la peau de l'aéronef et réaliser ainsi la mesure de pression hors de la couche limite de l'écoulement se développant au voisinage de la peau. Le mât peut être fixe ou mobile dans le cas d'une sonde destinée à s'orienter dans l'axe de l'écoulement.

Le réchauffage de la sonde est couramment réalisé au moyen d'une résistance chauffante réalisée sous forme d'un fil enroulé dans le corps de la sonde, c'est-à-dire à la fois dans le mât et dans le tube de Pitot. Le réchauffage de la sonde peut être régulé par une mesure de température de la sonde afin d'adapter la consommation électrique aux conditions extérieures entrainant le refroidissement de la sonde. Ce type de régulation nécessite néanmoins une puissance électrique maximum importante pour atteindre un réchauffage adéquat de la sonde.

On connait aussi du document GB 530 722 une sonde Pitot comprenant plusieurs fils chauffants alimentés en série.

A ce jour, on cherche à réduire toutes les formes de consommation énergétique et l'invention s'inscrit dans cet objectif en permettant de réduire la puissance maximale nécessaire au réchauffage pour permettre une mesure correcte de la pression totale dans toute les conditions rencontrées par l'aéronef.

A cet effet, l'invention a pour objet une sonde de mesure de pression totale d'un écoulement, la sonde étant destinée à équiper un aéronef, la sonde comprenant un tube de Pitot, caractérisée en ce qu'elle comprend en outre deux fils chauffants distincts alimentés séparément permettant chacun de réchauffer une partie de la sonde, et des moyens de répartition d'une puissance maximum donnée vers chacun des deux fils chauffants en fonction d'une température de chacune des deux parties.

L'invention a également pour objet un procédé de mise en oeuvre d'une sonde selon l'invention, caractérisé en ce qu'il consiste à privilégier l'atteinte d'une température minimale prédéfinie d'une première des deux parties de la sonde en allouant à la première partie de la sonde une part prédéfinie de la puissance maximum donnée tant que la température de la première partie est inférieure à la température minimale prédéfinie.

L'invention sera mieux comprise et d'autres avantages apparaîtront à la lecture de la description détaillée d'un mode de réalisation donné à titre d'exemple, description illustrée par le dessin joint dans lequel :
la figure 1 représente une sonde de mesure de pression totale selon l'invention ;
la figure 2 illustre une répartition de la puissance dans deux parties d'une sonde selon la figure 1, dont les fils chauffants sont alimentés en tension alternative, la répartition se faisant par alternance complète de la tension alternative ;
la figure 3 représente un exemple d'une sonde selon la figure 1, dont les fils chauffants sont alimentés en tension alternative ;
les figures 4 et 5 représentent deux variantes de réalisation d'une sonde selon la figure 1, dont les fils chauffants sont alimentés en tension continue ;
la figure 6 représente un exemple d'organigramme d'un procédé de mise en oeuvre d'une sonde selon l'invention.

Par souci de clarté, les mêmes éléments porteront les mêmes repères dans les différentes figures.

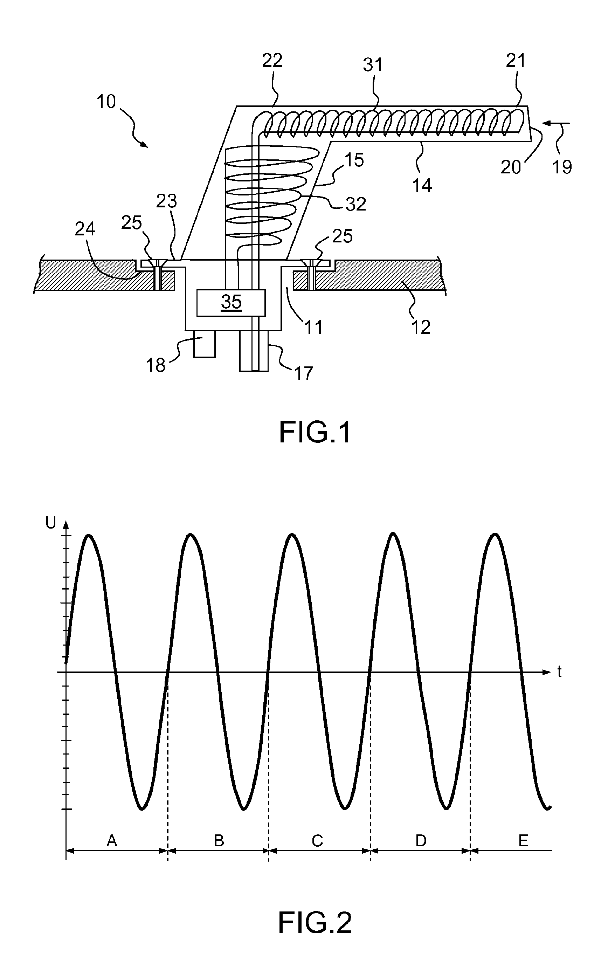

La figure 1 représente une sonde de mesure de pression totale 10 destinée à être fixée en traversée d'une ouverture 11 réalisée dans la peau 12 d'un aéronef. La sonde 10 comprend deux parties externes à la peau 12 et formée par un tube de Pitot 14 et par un mât 15 portant le tube de Pitot 14. La sonde 10 comprend également une partie interne à la peau 12 comportant un connecteur électrique 17 et un connecteur pneumatique 18. Le connecteur 18 permet le raccordement pneumatique du tube de Pitot 14 à un capteur de pression situé à l'intérieur du fuselage 12 de l'aéronef. La sonde 10 est positionnée sur la peau 12 de l'aéronef de telle sorte que le tube de Pitot 14 soit orienté sensiblement suivant un axe longitudinal de l'aéronef, hors de la couche limite, pour que la direction de l'écoulement, matérialisé par une flèche 19, fasse sensiblement face à un orifice d'entrée 20 situé à une première extrémité 21 du tube de Pitot 14.

Une seconde extrémité 22 du tube de Pitot 14, opposée à l'extrémité 21, est fermée de façon à créer un point d'arrêt dans le filet d'air prélevé dans l'écoulement et pénétrant dans le tube 14 par son orifice 20. Au niveau de l'extrémité 22 du tube, un canal pneumatique, non représenté sur la figure 1, s'ouvre dans le tube 14 pour y former une prise de pression au niveau de laquelle on cherche à mesurer la pression d'air. Le canal est par exemple relié à un capteur de pression ou à un autre dispositif de mesure de pression. Le capteur de pression permet de mesurer de façon effective la pression de l'air régnant à l'intérieur du tube 14 au niveau de son extrémité obstruée 22. Le capteur de pression peut appartenir à la sonde ou bien être déporté. Dans ce cas, le capteur de pression est raccordé à la sonde 10 au moyen d'un tuyau et du connecteur pneumatique 18.

A l'extrémité 22, le tube 14 comporte un ou plusieurs trous de purge non représentés et permettant l'évacuation de l'eau pénétrant à l'intérieur du tube 14. Hormis le ou les trous de purge, dont la section est faible par rapport à celle du tube 14, le tube 14 est fermé au niveau de son extrémité 22. La pression mesurée au niveau de cette extrémité représente donc la pression totale Pt de l'écoulement d'air.

Le mât 15 porte le tube de Pitot 14 au niveau de sa seconde extrémité 22. Le tube de Pitot 14 possède une forme sensiblement cylindrique et le mât 15 une forme allongée. Le mât 15 a par exemple une forme d'aile dont l'intrados et l'extrados peuvent être symétriques. Les deux parties externes de la sonde 10, tube de Pitot 14 et mât 15, sont des formes dissemblables. Il est bien entendu possible de distinguer deux parties de la sonde 10 autres que le tube de Pitot 14 et la mât 15, notamment si la sonde 10 comprend d'autres prises de pression, comme par exemple des prises de pression disposées sur la mât 15 et permettant de définir l'incidence locale de l'écoulement par rapport à la sonde 10 ou mesurant la pression statique. La première partie de la sonde 10 peut alors comprendre la tube de Pitot 14 et une portion du mât 15 la plus proche du tube de Pitot 14, portion contenant les prises de pression d'incidence.

La sonde comprend des moyens de fixation destinés à fixer la sonde 10 à la peau 12 de l'aéronef. Ces moyens comprennent par exemple une embase 23 formée par un épaulement destinée à venir au contact d'un lamage 24 réalisé dans la peau 12. Des vis 25 disposées autour de l'ouverture 11 immobilisent l'embase 23 par rapport à la peau 12.

Dans l'exemple représenté, le tube de Pitot 14 est fixe par rapport à la peau 12 de l'aéronef. Il est bien entendu possible de monter le tube de Pitot 14 sur un mât mobile comme par exemple une palette pouvant s'orienter dans l'axe de l'écoulement, comme par exemple décrit dans le brevet publié sous le n° FR 2 665 539 et déposé le 3 août 1990. L'embase 23 comprend alors une liaison pivot permettant la rotation du mât 15 par rapport à la peau 12 autour d'un axe perpendiculaire à la peau 12. Ainsi lorsque l'incidence locale de l'écoulement, au voisinage de la sonde 10 évolue, l'orientation du tube de Pitot 14 suit cette incidence afin de toujours faire face à l'écoulement. La mesure de pression totale s'en trouve améliorée lors de variation d'incidence locale de l'écoulement le long de la peau 12 de l'aéronef.

Le connecteur 17 permet le raccordement électrique de la sonde 10 à l'aéronef, notamment pour raccorder des moyens de réchauffage de l'ensemble de la sonde 10. Ces moyens de réchauffage comprennent un premier fil chauffant 31 permettant le réchauffage du tube de Pitot 14 sur toute sa longueur et un second fil chauffant 32 permettant le réchauffage du mât 15. De façon plus générale, les deux parties externes de la sonde sont réchauffées séparément par chacun des fils chauffants 31 et 32. Les deux fils chauffants 31 et 32 peuvent être réalisés dans un matériau dont la résistivité varie en fonction de sa température. Lors de son utilisation, on peut mesurer la valeur de la résistance de chacun des fils chauffants 31 et 32 afin de déterminer la température moyenne de chacune des deux parties externes de la sonde, le tube de Pitot et le mât 15. La mesure de résistance se fait avantageusement en mesurant l'intensité du courant circulant dans chacun des fils chauffants lors de l'alimentation des fils pour le réchauffage. Avec un coefficient de température positif, la résistance du fil augmente avec sa température et on obtient ainsi une régulation de la puissance électrique utilisé pour le réchauffage de la sonde.

L'alimentation des deux fils chauffants 31 et 32 est séparée afin de pouvoir réchauffer séparément le tube de Pitot 14 et le mât 15. L'alimentation séparée présente l'avantage de permettre une mesure d'intensité et donc de température distincte du tube de Pitot 14 et du mât 15 afin d'optimiser le réchauffage de ces deux parties externes de la sonde 10.

La mesure de température peut aussi être faite par des capteurs distincts des fils chauffants. 31 et 32. Dans ce cas, on dispose un premier capteur dans le tube de Pitot 14 et un second capteur dans le mât 15.

Pour limiter la consommation électrique de la sonde pour son réchauffage, la sonde limite elle-même sa puissance maximale consommée à une valeur donnée et pour ce faire comprend des moyens de répartition 35 d'une puissance maximum donnée vers chacun des deux fils chauffants 31 et 32 en fonction d'une température de chacune des deux parties externes de la sonde 10. Les moyens de répartition 35 peuvent appartenir à la partie interne de la sonde 10, en amont ou en aval du connecteur électrique 17. A titre d'exemple, la valeur de puissance maximale peut être de l'ordre de 300W.

La puissance électrique nécessaire au réchauffage de la sonde 10 peut être distribuée par l'aéronef vers la sonde au moyen d'une tension alternative. Pour mettre en oeuvre cette variante d'alimentation, il est courant de disposer à bord d'aéronefs d'un réseau électrique 115V - 400Hz. Il est bien entendu que l'invention n'est pas limitée à ce type de réseau alternatif. On voit par exemple apparaitre dans certains aéronefs récents, un réseau 230V - 400Hz.

Les moyens de répartition 35 sont avantageusement agencés pour distribuer alternativement vers chacun des fils chauffants 31 et 32 la puissance totale disponible durant un nombre d'alternances complètes, alternances de la tension alternative, pour chacun des fils chauffants, le rapport entre les nombres d'alternances de chacun des fils chauffants étant défini pour obtenir la répartition de puissance souhaitée entre les deux fils chauffants. Le fait d'alterner l'alimentation des fils chauffants au moment d'un changement d'alternance permet de réaliser le changement au moment du passage à zéro du courant dans l'alimentation alternative. Ceci facilite l'action des moyens de répartition 35.

Lorsque les fils chauffants sont formés d'une résistance variable avec sa température, la température de chacune des deux parties 14 et 15 de la sonde 10 peut être définie en alimentant les deux fils chauffants 31 et 32 simultanément en parallèle par la tension alternative durant au moins une alternance complète et en mesurant l'intensité du courant circulant dans chacun des fils chauffants 31 et 32 durant l'alimentation simultanée.

La figure 2 permet d'illustrer la répartition de la puissance par alternance et la mesure de température réalisée au cours d'une même alternance. Cette figure, représente sous forme de chronogramme, l'évolution de la tension d'alimentation U de la sonde au cours du temps t. Sur cette figure, cinq alternances sont représentées. Durant l'alternance A, les deux fils chauffants 31 et 32 sont alimentés et on peut mesurer simultanément la température des deux fils chauffants 31 et 32. Durant les alternances B et C, seul le fil chauffant 31 réchauffant le tube de Pitot 14 est alimenté. Durant l'alternance D, seul le fil chauffant 32 réchauffant le mât 15 est alimenté. Durant l'alternance E, les deux fils chauffants 31 et 32 sont alimentés pour mesurer à nouveau les températures des parties externes de la sonde 10. Lorsqu'on utilise un réseau alternatif, sa pulsation est généralement bien supérieure à une durée caractéristique de l'inertie thermique des différentes parties de la sonde 10. Il est donc possible de ne mesurer la température des parties de la sonde que périodiquement, ici toutes les 4 alternances. Une périodicité plus longue est bien entendu possible. Il est également envisageable de mesurer la température de chaque partie de la sonde lorsque seule la partie considérée est alimentée.

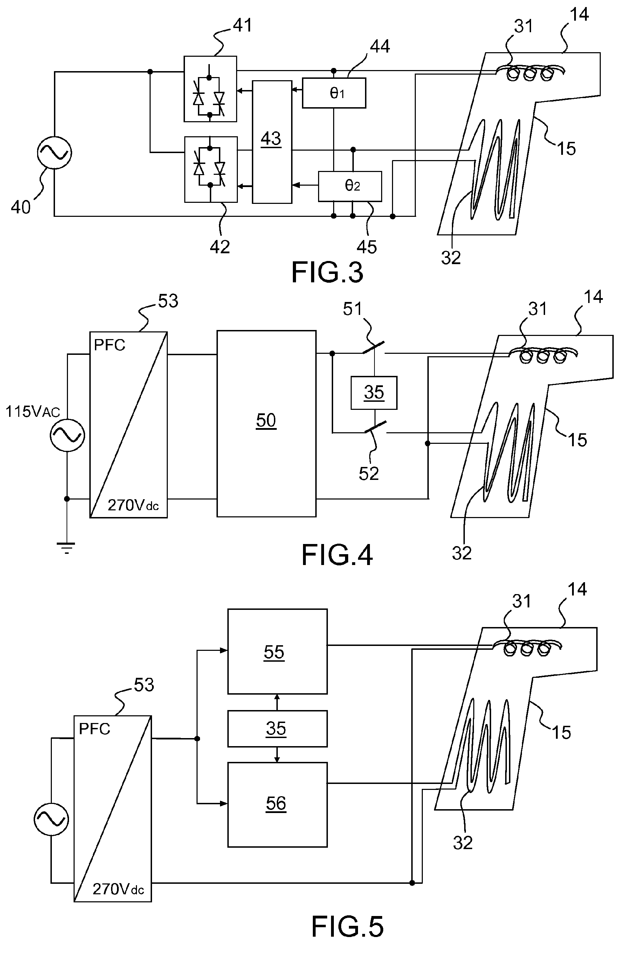

La figure 3 représente un exemple d'une sonde selon la figure 1, dont les fils chauffants 31 et 32 sont alimentés par une source de tension alternative 40. Les moyens de répartition 35 comprennent deux groupes d'interrupteurs électroniques 41 et 42, par exemple à thyristors, commandés par un module de gestion 43. Le groupe 41 alimente le fil chauffant 31 et le groupe 42 le fil chauffant 32. Les moyens de répartition 35 comprennent en outre deux moyens de mesure de température 44 et 45, le moyen 44 mesurant la température du tube de Pitot 14 et le moyen 45, la température du mât 15 en mesurant le courant circulant dans le fil chauffant associé. Le module 43 reçoit les informations de température délivrées par les moyens 44 et 45.

La puissance électrique nécessaire au réchauffage de la sonde 10 peut être distribuée par l'aéronef vers la sonde au moyen d'une tension continue. Pour mettre en oeuvre cette variante d'alimentation, il est courant de disposer, à bord d'aéronefs, d'un réseau électrique continu par exemple de 28V et sur certains aéronefs récents d'un réseau 270V continu. Toute autre tension continue peut bien entendue être utilisée pour la mise en oeuvre de l'invention.

Les figures 4 et 5 représentent deux variantes de réalisation de d'une sonde selon la figure 1, dont les fils chauffants 31 et 32 sont alimentés par une source de tension continue.

Dans la variante de la figure 4, la sonde comprend un convertisseur 50 délivrant une tension continue et alimentant les fils chauffants 31 et 32 par l'intermédiaire d'interrupteurs 51 et 52, respectivement associés au fils chauffants 31 et 32. Les moyens de répartition 35 sont agencés pour piloter les interrupteurs 51 et 52 en fonction de la répartition de puissance souhaitée. Le convertisseur 50 peut être un convertisseur alternatif-continu ou continu-continu comme représenté. Dans la variante de la figure 4, le convertisseur 50 est un abaisseur de tension et est alimenté par une tension 270V continue. Le convertisseur 50 est régulé en puissance à une puissance maximum donnée, par exemple de 300W. La tension continue de 270V peut être fournie par un réseau de l'aéronef ou délivrée par un convertisseur alternatif continu 53 possédant un correcteur de facteur de forme noté PFC. Le convertisseur 53 est par exemple alimenté par le réseau de bord 115V - 400Hz.

Dans la variante de la figure 5, la sonde 10 comprend un convertisseur 55 associé au fil chauffant 31 et un convertisseur 56 associé au fil chauffant 32. Les moyens de répartition 35 sont agencés pour piloter les convertisseurs 55 et 56 en fonction de la répartition de puissance souhaitée. Les convertisseurs 55 et 56 peuvent être alternatif-continu ou continu-continu comme représenté. Dans la variante de la figure 5, les convertisseurs 55 et 56 sont des abaisseurs de tension et sont alimentés par une tension 270V continue qui peut être fournie par le convertisseur 53.

Dans cette variante, il est possible de réaliser une régulation linéaire et simultanée de la température des deux parties de la sonde 10. Cette température peut être mesurée directement par le courant circulant dans les deux fils chauffants 31 et 32.

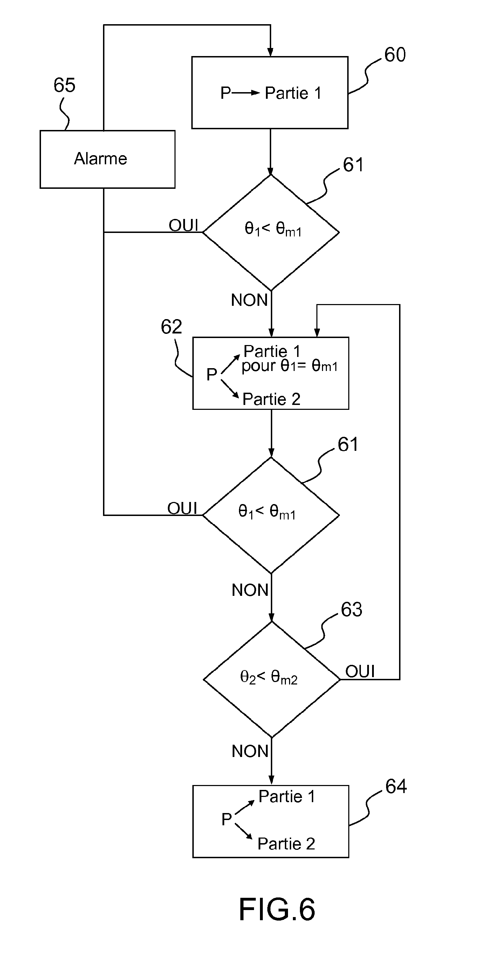

La figure 6 représente un exemple d'organigramme d'un procédé de mise en oeuvre d'une sonde selon l'invention. Ce procédé peut être mis en oeuvre dans les différentes variantes de sondes qu'elles soient alimentées en tension continue ou alternative. Le procédé permet de limiter la puissance consommée par la sonde pour son réchauffage en utilisant au mieux une puissance maximum donnée.

Dans un premier mode de répartition de la puissance maximale donnée, on privilégie l'atteinte d'une température minimale prédéfinie θₘ₁ d'une première des deux parties de la sonde 10. La première partie est avantageusement le tube de Pitot 14. Ce premier mode se fait en allouant au tube de Pitot 14 une part prédéfinie de la puissance maximum donnée P tant que la température courante θ₁ du tube de Pitot 14 est inférieure à la température minimale prédéfinie θₘ₁. La part prédéfinie est par exemple la totalité de la puissance maximum donnée P. il est également possible d'allouer à la seconde partie de la sonde 10 (le mât 15), une faible partie de la puissance maximum donnée P, par exemple de l'ordre de 5 à 10%. Cette faible partie permet par exemple de connaitre la température de la seconde partie de la sonde 10 lorsque la mesure de température est réalisée au moyen d'une mesure de courant dans le fil chauffant correspondant. Le premier mode de répartition est illustré sur la figure 6 par l'étape 60 qui consiste à alimenter le fil chauffant 31 et par le test 61 qui consiste à comparer la température courante θ₁ du tube de Pitot 14 à la température minimale prédéfinie θₘ₁. Tant que le résultat du test 61 est positif, on poursuit le réchauffage prioritaire du tube de Pitot 14.

Si le résultat du test 61 est négatif, c'est-à-dire dès que la première partie de la sonde 10 a atteint la température minimale prédéfinie θₘ₁, il est possible de changer de mode de répartition de la puissance P entre les deux fils chauffants 31 et 32.

Lors de ce changement, on peut avantageusement passer dans un deuxième mode de répartition, illustré sur la figure 6 par l'étape 62 qui consiste à allouer à la première partie (le tube de Pitot 14) une part variable de la puissance maximum donnée P adaptée pour conserver la première partie à sa température minimale prédéfinie θₘ₁, et à allouer à une seconde des deux parties (le mât 15) de la sonde 10 le reste de la puissance maximale disponible P.

Le deuxième mode de répartition peut être poursuivi tant que la température courante θ₂ de la seconde partie (le mât 15) reste inférieure à une température minimale prédéfinie de la seconde partie θₘ₂. Il est possible de choisir les mêmes valeurs de température minimale prédéfinie pour les deux parties de la sonde 10, c'est-à-dire θₘ₁ = θₘ₂. On peut également choisir des températures minimales prédéfinies θₘ₁ et θₘ₂ différentes. Par exemple, la température minimale prédéfinie de la première partie peut être supérieure à la température minimale prédéfinie de la seconde partie, θₘ₁ > θₘ₂, afin de privilégier le réchauffage de la première partie. Sur la figure 6, un test 63 illustre la comparaison de la température courante θ₂ avec la température minimale prédéfinie θₘ₂.

Sur la figure 6, on a placé un test 61 avant le test 63 afin de garantir que la température courante θ₁ de la première partie reste bien supérieure ou égale à la température minimale prédéfinie de la première partie θₘ₁ tout au long du deuxième mode de répartition. Dans le cas contraire, on revient au premier mode de répartition afin de réchauffer en priorité la première partie de la sonde 10.

Dès que la seconde partie a atteint sa température minimale prédéfinie, on peut avantageusement passer dans un troisième mode de répartition, illustré sur la figure 6 par l'étape 64 qui consiste à allouer proportionnellement la puissance maximale disponible P aux deux parties 14 et 15 de la sonde 10.

Lorsque les fils chauffants 31 et 32 sont formés d'une résistance variable avec leur température, le troisième mode de répartition consiste à maintenir constant un rapport entre les valeurs de résistance des fils chauffants pour l'allocation proportionnelle de la puissance maximale disponible aux deux parties 14 et 15 de la sonde 10.

Dans ce troisième de mode de répartition, les températures courantes des deux parties 14 et 15 de la sonde 10 peuvent s'élever au dessus leur température minimale prédéfinie respective θₘ₁ et θₘ₂. Alternativement, il est possible de limiter la puissance consommée dans la sonde 10 pour maintenir les températures courantes des deux parties 14 et 15 à leur température minimale prédéfinie respective θₘ₁ et θₘ₂. Ceci permet de limiter la consommation électrique de la sonde 10. Par contre le troisième de mode de répartition présente l'avantage de conserver pour la sonde 10 une puissance consommée toujours constante et prédéfinie. Ceci permet de piloter au plus juste les convertisseurs, dans le cas d'une alimentation en courant continu ou d'utiliser toutes les alternances dans le cas d'une alimentation en courant alternatif. En conséquence, moins de perturbations sont rejetées sur le réseau électrique de l'aéronef.

Au cours du premier mode de répartition, il est possible de déclencher une alarme 65 pour prévenir que la première partie de la sonde n'a pas atteint une température critique, en dessous de laquelle on déclare invalide la mesure réalisée par la sonde 10. La température critique peut être égale ou inférieure à la température minimale prédéfinie θₘ₁. Cette alarme peut être temporisée et ne se déclencher qu'après un temps prédéfini pendant lequel on mesure une température inférieure à la température critique.

## Revendications

1. Sonde de mesure de pression totale d'un écoulement, la sonde (10) étant destinée à équiper un aéronef, la sonde (10) comprenant un tube de Pitot (14), deux fils chauffants (31, 32) distincts, **caractérisée en ce que** les deux fils chauffants (31, 32) sont alimentés séparément permettant chacun de réchauffer une partie (14, 15) de la sonde (10), et **en ce que** la sonde (10) comprend en outre des moyens de répartition (35) d'une puissance maximum donnée (P) vers chacun des deux fils chauffants (31, 32) en fonction d'une température courante (θ₁, θ₂) de chacune des deux parties (14, 15).

2. Sonde selon la revendication 1, **caractérisée en ce qu'**elle comprend des moyens de fixation (23, 25) destinés à fixer la sonde (10) à une peau (12) de l'aéronef et un mât (15) reliant le tube de Pitot (14) aux moyens de fixation (23, 25) et **en ce que** le premier (31) des deux fils chauffants est destiné à réchauffer le tube de Pitot (14) formant une première des deux parties et **en ce que** le second (32) des deux fils chauffants est destiné à réchauffer le mât (15) formant une seconde des deux parties.

3. Sonde selon l'une des revendications précédentes, **caractérisée en ce qu'**elle est destinée à être alimentée au moyen d'une tension alternative et **en ce que** les moyens de répartition (35) sont agencés pour distribuer alternativement vers chacun des fils chauffants (31, 32) la puissance totale disponible (P) durant un nombre d'alternances complètes de la tension alternative pour chacun des fils chauffants (31, 32), un rapport entre les nombres d'alternances de chacun des fils chauffants (31, 32) étant défini pour obtenir une répartition de puissance souhaitée.

4. Sonde selon la revendication 3, **caractérisée en ce que** les fils chauffants (31, 32) sont formés d'une résistance variable avec sa température et **en ce que** la température courante (θ₁, θ₂) de chacune des deux parties (14, 15) est définie en alimentant les deux fils chauffants (31, 32) simultanément en parallèle par la tension alternative durant au moins une alternance complète et en mesurant l'intensité du courant circulant dans chacun des fils chauffants (31, 32) durant l'alimentation simultanée.

5. Sonde selon l'une des revendications 1 ou 2, **caractérisée en ce qu'**elle comprend un convertisseur (50) délivrant une tension continue et alimentant les fils chauffants (31, 32) par l'intermédiaire d'interrupteurs (51, 52), un interrupteur (51, 52) étant associé à chacun des fils chauffants (31, 32), et **en ce que** les moyens de répartition (35) sont agencés pour piloter les interrupteurs (51, 52) en fonction d'une répartition de puissance souhaitée.

6. Sonde selon l'une des revendications 1 ou 2, **caractérisée en ce qu'**elle comprend, associé à chacun des fils chauffants (31, 32), un convertisseur (55, 56) délivrant une tension continue alimentant le fil chauffant associé (31, 32), et **en ce que** les moyens de répartition (35) sont agencés pour piloter les convertisseurs (55, 56) en fonction d'une répartition de puissance souhaitée.

7. Procédé de mise en oeuvre d'une sonde (10) selon l'une des revendications précédentes, **caractérisé en ce qu'**il consiste à privilégier (60) l'atteinte d'une température minimale prédéfinie (θₘ₁) d'une première (14) des deux parties de la sonde (10) en allouant à la première partie (14) de la sonde (10) une part prédéfinie de la puissance maximum donnée (P) tant que la température (θ₁) de la première partie (14) est inférieure à la température minimale prédéfinie (θₘ₁).

8. Procédé selon la revendication 7, **caractérisé en ce que** dès que la première partie (14) de la sonde (10) a atteint (61) la température minimale prédéfinie (θₘ₁) de la première partie (14), les moyens de répartition (35) allouent (62) à la première partie (14) une part variable de la puissance maximum donnée (P) adaptée pour conserver la première partie (14) à sa température minimale prédéfinie (θₘ₁) et allouent à une seconde (15) des deux parties (14, 15) de la sonde (10) le reste de la puissance maximale disponible (P).

9. Procédé selon la revendication 8, **caractérisé en ce que** dès que la seconde partie (15) a atteint une température minimale prédéfinie (θₘ₂) de la seconde partie (15), les moyens de répartition (35) allouent (64) proportionnellement la puissance maximale disponible (P) aux deux parties (14, 15) de la sonde (10).

10. Procédé selon la revendication 9, **caractérisé en ce que** les fils chauffants (31, 32) sont formés d'une résistance variable avec sa température et **en ce qu'**il consiste à maintenir constant un rapport entre les valeurs de résistance des fils chauffants (31, 32) pour l'allocation proportionnelle de la puissance maximale disponible aux deux parties (14, 15) de la sonde (10).

11. Procédé selon l'une des revendications 7 à 10, **caractérisé en ce qu'**on déclenche une alarme (65) pour prévenir que la première partie (14) de la sonde (10) n'a pas atteint une température critique.

## Patentansprüche

1. Sonde zum Messen des Gesamtdrucks einer Strömung, wobei die Sonde (10) zur Ausstattung eines Luftfahrzeugs bestimmt ist, wobei die Sonde (10) ein Pitotrohr (14), zwei unterschiedliche Heizdrähte (31, 32) umfasst, **dadurch gekennzeichnet, dass** die zwei Heizdrähte (31, 32) separat versorgt werden, wodurch jedem erlaubt ist, einen Teil (14, 15) der Sonde (10) separat zu erwärmen, und dass die Sonde (10) ferner Verteilungsmittel (35) einer gegebenen maximalen Leistung (P) an jeden der zwei Heizdrähte (31, 32) in Abhängigkeit von einer laufenden Temperatur (θ₁, θ₂) jedes der zwei Teile (14, 15) umfasst.

2. Sonde nach Anspruch 1, **dadurch gekennzeichnet, dass** sie Befestigungsmittel (23, 25), die zur Befestigung der Sonde (10) an einer Haut (12) des Luftfahrzeugs bestimmt sind, und einen Mast (15), der das Pitotrohr (14) mit den Befestigungsmitteln (23, 25) verbindet, umfasst, und dass der erste (31) der zwei Heizdrähte zum Heizen des Pitotrohrs (14) bestimmt ist, das einen ersten der zwei Teile bildet, und dass der zweite (32) der zwei Heizdrähte bestimmt ist, den Mast (15) zu erwärmen, der einen zweiten der zwei Teile bildet.

3. Sonde nach einem der vorangehenden Ansprüche, **dadurch gekennzeichnet, dass** sie bestimmt ist, mittels einer Wechselspannung versorgt zu werden und dass die Verteilungsmittel (35) ausgebildet sind, um abwechselnd an jeden der Heizdrähte (31, 32) die gesamte verfügbare Leistung (P) während einer Anzahl vollständiger Halbperioden der Wechselspannung für jeden der Heizdrähte (31, 32) zu verteilen, wobei ein Verhältnis zwischen der Anzahl der Halbperioden jedes der Heizdrähte (31, 32) festgelegt ist, um eine gewünschte Leistungsverteilung zu erhalten.

4. Sonde nach Anspruch 3, **dadurch gekennzeichnet, dass** die Heizdrähte (31, 32) von einem Widerstand gebildet sind, der in Abhängigkeit von seiner Temperatur variabel ist und dass die laufende Temperatur (θ₁, θ₂) jedes der zwei Teile (14, 15) bei der gleichzeitigen parallelen Versorgung der zwei Heizdrähte (31, 32) durch die Wechselspannung während mindestens einer vollständigen Halbperiode und bei der Messung der Stärke des Stroms, der in jedem der Heizdrähte (31, 32) während der gleichzeitigen Versorgung zirkuliert, festgelegt ist.

5. Sonde nach einem der Ansprüche 1 oder 2, **dadurch gekennzeichnet, dass** sie einen Wandler (50) umfasst, der eine Gleichspannung bereitstellt und die Heizdrähte (31, 32) über Schalter (51, 52) versorgt, wobei ein Schalter (51, 52) jedem der Heizdrähte (31, 32) zugeordnet ist, und dass die Verteilungsmittel (35) ausgebildet sind, um die Schalter (51, 52) in Abhängigkeit von einer gewünschten Leistungsverteilung zu steuern.

6. Sonde nach einem der Ansprüche 1 oder 2, **dadurch gekennzeichnet, dass** sie, jedem der Heizdrähte (31, 32) zugeordnet, einen Wandler (55, 56) umfasst, der eine Gleichspannung bereitstellt, die den zugeordneten Heizdraht (31, 32) versorgt, und dass die Verteilungsmittel (35) ausgebildet sind, um die Wandler (55, 56) in Abhängigkeit von einer gewünschten Leistungsverteilung zu steuern.

7. Verfahren für die Umsetzung einer Sonde (10) nach einem der vorangehenden Ansprüche, **dadurch gekennzeichnet, dass** es darin besteht, das Erreichen einer vorbestimmten minimalen Temperatur (θₘ₁) eines ersten (14) der zwei Teile der Sonde (10) durch Zuweisen an den ersten Teil (14) der Sonde (10) eines vorbestimmten Anteils der gegebenen maximalen Leistung (P) zu privilegieren (60), solange die Temperatur (θ₁) des ersten Teils (14) niedriger als die vorbestimmte minimale Temperatur (θₘ₁) ist.

8. Verfahren nach Anspruch 7, **dadurch gekennzeichnet, dass**, sobald der erste Teil (14) der Sonde (10) die vorbestimmte minimale Temperatur (θₘ₁) des ersten Teils (14) erreicht hat (61), die Verteilungsmittel (35) dem ersten Teil (14) einen variablen Anteil der gegebenen maximalen Leistungen (P) zuweisen (62), der geeignet ist, um den ersten Teil (14) auf seiner vorbestimmten minimalen Temperatur (θₘ₁) zu halten, und dem zweiten (15) der zwei Teile (14, 15) der Sonde (10) den Rest der verfügbaren maximalen Leistung (P) zuweisen.

9. Verfahren nach Anspruch 8, **dadurch gekennzeichnet, dass**, sobald der zweite Teil (15) eine vorbestimmte minimale Temperatur (θₘ₂) des zweiten Teils (15) erreicht hat, die Verteilungsmittel (35) die verfügbare maximale Leistung (P) den beiden Teilen (14, 15) der Sonde (10) proportional zuweisen (64).

10. Verfahren nach Anspruch 9, **dadurch gekennzeichnet, dass** die Heizdrähte (31, 32) von einem Widerstand gebildet sind, der in Abhängigkeit von seiner Temperatur variabel ist und dass es darin besteht, ein Verhältnis zwischen den Widerstandswerten der Heizdrähte (31, 32) für die proportionale Zuweisung der verfügbaren maximalen Leistung an die zwei Teile (14, 15) der Sonde (10) konstant zu halten.

11. Verfahren nach einem der Ansprüche 7 bis 10, **dadurch gekennzeichnet, dass** ein Alarm (65) ausgelöst wird, um anzuzeigen, dass der erste Teil (14) der Sonde (10) keine kritische Temperatur erreicht hat.

## Claims

1. A probe for measuring the total pressure of a flow, the probe (10) being intended to equip an aircraft, the probe (10) comprising a Pitot tube (14), two separate heating wires (31, 32), **characterised in that** the two heating wires (31, 32) are supplied separately, allowing each one to heat a part (14, 15) of the probe (10), and **in that** the probe (10) further comprises means of distributing (35) a given maximum power (P) to each of the two heating wires (31, 32) as a function of a current temperature (θ₁, θ₂) of each of the two parts (14, 15).

2. The probe according to claim 1, **characterised in that** it comprises fixing means (23, 25) intended to fix the probe (10) to a skin (12) of the aircraft and a mast (15) connecting the Pitot tube (14) to the fixing means (23, 25), and **in that** the first (31) of the two heating wires is intended to heat the Pitot tube (14) forming a first of the two parts and **in that** the second (32) of the two heating wires is intended to heat the mast (15) forming a second of the two parts.

3. The probe according to any of the preceding claims, **characterised in that** it is intended to be supplied by means of an AC voltage and **in that** the distribution means (35) are arranged to alternately distribute the total available power (P) to each of the heating wires (31, 32) during a number of complete alternations of the AC voltage for each of the heating wires (31, 32), a ratio between the numbers of alternations of each of the heating wires (31, 32) being defined in order to obtain a desired power distribution.

4. The probe according to claim 3, **characterised in that** the heating wires (31, 32) are formed by a resistance that varies with its temperature and **in that** the current temperature (θ₁, θ₂) of each one of the two parts (14, 15) is defined by supplying the two heating wires (31, 32) simultaneously in parallel with the AC voltage during at least one complete alternation and by measuring the intensity of the current circulating in each of the heating wires (31, 32) during the simultaneous supplying.

5. The probe according to either of claims 1 or 2, **characterised in that** it comprises a converter (50) delivering a DC voltage and supplying the heating wires (31, 32) by means of switches (51, 52), one switch (51, 52) being associated with each of the heating wires (31, 32), and **in that** the distributions means (35) are arranged to control the switches (51, 52) as a function of a desired power distribution.

6. The probe according to either of claims 1 or 2, **characterised in that** it comprises, associated with each one of the heating wires (31, 32), a converter (55, 56) delivering a DC voltage supplying the associated heating wire (31, 32), and **in that** the distribution means (35) are arranged to control the converters (55, 56) as a function of a desired power distribution.

7. A method of using a probe (10) according to any of the preceding claims, **characterised in that** it consists of priority being given (60) to the reaching of a pre-defined minimum temperature (θₘ₁) of a first (14) of two parts of the probe (10) by allocating to the first part (14) of the probe (10) a pre-defined share of the given maximum power (P) for as long as the temperature (θ₁) of the first part (14) is lower than the pre-defined minimum temperature (θₘ₁).

8. The method according to claim 7, **characterised in that** as soon as the first part (14) of the probe (10) has reached (61) the pre-defined minimum temperature (θₘ₁) of the first part (14), the distribution means (35) allocate (62) to the first part (14) a variable share of the given maximum power (P) adapted to keep the first part (14) at its pre-defined minimum temperature (θₘ₁) and allocate to a second (15) of the two parts (14, 15) of the probe (10) the rest of the maximum available power (P).

9. The method according to claim 8, **characterised in that** as soon as the second part (15) has reached a pre-defined minimum temperature (θₘ₂) of the second part (15), the distribution means (35) proportionally allocate (64) the maximum available power (P) to the two parts (14, 15) of the probe (10).

10. The method according to claim 9, **characterised in that** the heating wires (31, 32) are formed by a resistance that varies with its temperature, and **in that** it consists of keeping constant a ratio between the resistance values of the heating wires (31, 32) for the proportional allocation of the maximum available power to the two parts (14, 15) of the probe (10).

11. The method according to any of claims 7 to 10, **characterised in that** an alarm is triggered (65) to warn that the first part (14) of the probe (10) has not reached a critical temperature.
